(19) Europäisches Patentamt / European Patent Office / Office européen des brevets

(11) **EP 3 388 145 B1**

(12) **EUROPEAN PATENT SPECIFICATION**

(45) Date of publication and mention of the grant of the patent:
**04.10.2023 Bulletin 2023/40**

(21) Application number: **16873042.2**

(22) Date of filing: **07.12.2016**

(51) International Patent Classification (IPC):
**B01J 20/18** (2006.01)     **B01J 20/28** (2006.01)
**B01D 53/04** (2006.01)     **H01M 8/00** (2016.01)
**H01M 8/0612** (2016.01)     **H01M 8/10** (2016.01)

(52) Cooperative Patent Classification (CPC):
**B01J 20/18; B01D 53/04; B01J 20/2808;
C01B 3/047; C01B 3/508; H01M 8/00;
H01M 8/0612; H01M 8/10;** C01B 2203/066;
Y02E 60/50

(86) International application number:
**PCT/JP2016/086441**

(87) International publication number:
**WO 2017/099149 (15.06.2017 Gazette 2017/24)**

(54) **AMMONIA REMOVAL METHOD AND METHOD FOR MANUFACTURING HYDROGEN GAS FOR FUEL CELL AUTOMOBILE**

AMMONIAKENTFERNUNGSVERFAHREN UND VERFAHREN ZUR HERSTELLUNG VON WASSERSTOFFGAS FÜR BRENNSTOFFZELLENKRAFTFAHRZEUG

PROCÉDÉ D'ÉLIMINATION D'AMMONIAC ET PROCÉDÉ DE FABRICATON D'HYDROGÈNE GAZEUX POUR AUTOMOBILE À PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2015 JP 2015238986**

(43) Date of publication of application:
**17.10.2018 Bulletin 2018/42**

(73) Proprietors:
• **Hiroshima University**
  **Higashihiroshima-shi**
  **Hiroshima 739-8511 (JP)**
• **Resonac Corporation**
  **Tokyo (JP)**
• **Taiyo Nippon Sanso Corporation**
  **Tokyo 142-8558 (JP)**
• **Toyota Industries Corporation**
  **Aichi-ken, 448-8671 (JP)**

(72) Inventors:
• **KOJIMA, Yoshitsugu**
  **Higashihiroshima-shi**
  **Hiroshima 739-8511 (JP)**
• **AOKI, Takanori**
  **Tokyo 105-8518 (JP)**
• **FUJITANI, Tadahiro**
  **Tsukuba-shi**
  **Ibaraki 305-8565 (JP)**
• **ADACHI, Takayoshi**
  **Tokyo 142-8558 (JP)**
• **KUBO, Hidehito**
  **Kariya-shi**
  **Aichi 448-8671 (JP)**

(74) Representative: **Strehl Schübel-Hopf & Partner**
  **Maximilianstrasse 54**
  **80538 München (DE)**

(56) References cited:
**JP-A- S6 014 936        JP-A- H06 296 819
JP-A- S54 126 689      JP-A- 2009 087 726
JP-A- 2014 058 433    JP-A- 2014 080 339
JP-A- 2015 059 075**

• OLIVIER CAMUS ET AL: "Ceramic membranes for ammonia recovery", AICHE JOURNAL, vol. 52, no. 6, 1 June 2006 (2006-06-01), pages 2055-2065, XP055565458, US ISSN: 0001-1541, DOI: 10.1002/aic.10800

**Description**

Technical Field

The present invention relates to an ammonia removal method to be used for obtaining a mixed gas having an ammonia concentration of 0.1 mol ppm or less in a highly efficient manner from a mixed gas comprising hydrogen, nitrogen, and ammonia and having an ammonia concentration exceeding 0.1 mol ppm and having a $H_2O$ content of 5.0 mol % or less, and a method for producing a hydrogen gas for a fuel cell automobile, the method comprising the ammonia removal method.

Background Art

To solve problems such as: a risk against the depletion of fossil fuels due to mass consumption of raw materials derived from fossil fuels, mass consumption of electric energy, and the like each caused by an increase in the world population; and concern over global warming due to an increase in carbon dioxide, transition to a society in which renewable energy (such as solar heat, sunlight, geothermal energy, and wind power) that does not produce carbon dioxide is utilized in a highly efficient manner is expected. The renewable energy is utilized by being converted into electric energy, but the energy density thereof is low, so that it is difficult to store and transport a large amount of renewable energy.

Hydrogen energy is proposed as clean secondary energy of the above-described renewable energy. Hydrogen is secondary energy that does not produce carbon dioxide and that can be stored and transported, and therefore building hydrogen energy-based society utilizing the hydrogen energy is expected. However, hydrogen is a gas at normal temperature and normal pressure, and an extremely low temperature or a high pressure of several tens MPa or more is required to highly densify hydrogen for transportation. Therefore, in recent years, utilization of ammonia has received attention as a chemical substance (hydrogen carrier) that makes the storage and transportation of hydrogen easy.

Ammonia is easily liquefied at 20°C and at 0.857 MPa, and liquid ammonia is an exceptional hydrogen carrier in that it has an extremely high weight hydrogen density of 17.8% by weight and has a volume hydrogen density that is 1.5 to 2.5 times larger than that of liquid hydrogen.

Ammonia is thus excellent as a hydrogen carrier, but in the case where hydrogen is taken out by decomposing ammonia, it is necessary to decompose ammonia and remove nitrogen, undecomposed ammonia, and the like from the decomposition composition.

For example, high purity is required for a hydrogen gas to be used for a fuel cell such as a solid polymer fuel cell comprising a proton exchange membrane, and in this case, the amount of ammonia left in the decomposition gas gives an influence on the purity. For example, it is known that in a solid polymer fuel cell comprising a perfluorosulfonic acid-based proton exchange membrane, ammonia reacts with a proton in the proton exchange membrane to produce an ammonium ion, and the ammonium ion brings about cell deterioration through passivation. Fuel cell automobiles and fuel cell fork lift trucks mainly utilize the solid polymer fuel cells comprising a perfluorosulfonic acid-based proton exchange membrane. In addition, according to an international standard (ISO 14687-2), the ammonia concentration in hydrogen for a fuel cell automobile is specified to be 0.1 mol ppm or less.

Thus, to produce a high-purity hydrogen gas, which can be supplied for the fuel cell automobiles and the like, using ammonia as a hydrogen carrier, a technology for removing ammonia left in a gas in which ammonia has been decomposed is particularly required.

For example, PTL1 describes a method in which liquid ammonia is vaporized, the vaporized ammonia is then decomposed in a decomposition furnace to obtain a decomposition gas comprising nitrogen and hydrogen, and undecomposed ammonia and moisture are removed from the decomposition gas by adsorption.

In addition, PTL2 describes a hydrogen production system provided with: an ammonia decomposition apparatus that decomposes ammonia into hydrogen and nitrogen; and an ammonia adsorption apparatus that adsorbs and removes ammonia discharged from the decomposition apparatus, wherein the ammonia adsorption apparatus includes an adsorbent for ammonia, having a heat of ammonia adsorption of 50 to 180 kJ/mol, an ammonia adsorption capacity of 0.1 to 4 mmol/g, and a volume of pore size from 50 nm to 10 $\mu$m of 0.1 to 1 ml/g.

Citation List

Patent Literature

PTL1: JP S61-41841 B

PTL2: JP 2015-59075 A

Summary of Invention

Technical Problem

In PTL1, liquid ammonia is vaporized, the vaporized ammonia is decomposed in a decomposition furnace to obtain a decomposition gas comprising nitrogen and hydrogen, and undecomposed ammonia is removed by allowing the decomposition gas to pass through an adsorption column in which an adsorbent such as synthetic zeolite is packed. However, the amount of undecomposed ammonia in the mixed gas at the outlet of the adsorption column is 0.8 ppm, and therefore ammonia cannot be removed to such an extent that the mixed gas can be supplied for a fuel cell automobile.
In addition, it is disclosed that the ammonia concentration in the gas at the outlet of the ammonia adsorption apparatus described in PTL2 is 1 ppm or less, but it is not disclosed that the ammonia concentration of 0.1 mol ppm or less is achieved.
The present invention has been made under such circumstances, and an object of the present invention is to provide an ammonia removal material and an ammonia removal method that make it possible to obtain a mixed gas (B) having an ammonia concentration of 0.1 mol ppm or less (hereinafter, also referred to as "mixed gas (B)") in a highly efficient manner from a mixed gas (A) comprising hydrogen, nitrogen, and ammonia and having an ammonia concentration exceeding 0.1 mol ppm (hereinafter, also referred to as "mixed gas (A)"), and a method for producing a hydrogen gas for a fuel cell automobile, the method comprising the ammonia removal method.

Solution to Problem

The present inventors have conducted diligent studies for the purpose of achieving the object to find that a mixed gas (B) having an ammonia concentration of 0.1 mol ppm or less can be supplied in a highly efficient manner by contacting an ammonia removal material comprising zeolite having a particular pore size with a mixed gas (A) comprising hydrogen, nitrogen, and ammonia and having an ammonia concentration exceeding 0.1 mol ppm and having a $H_2O$ content of 5.0 mol% or less.
The present invention has been accomplished based on such finding.
That is, the present invention provides the [1] to [10] described below.

[1] An ammonia removal method that removes ammonia so as to obtain a mixed gas (B) having an ammonia concentration of 0.1 mol ppm or less from a mixed gas (A) comprising hydrogen, nitrogen, and ammonia, having an ammonia concentration exceeding 0.1 mol ppm, and having a $H_2O$ content of 5.0 mol% or less, the ammonia removal method comprising the following step (1): Step (1): a step of contacting the mixed gas (A) comprising hydrogen, nitrogen, and ammonia, having an ammonia concentration exceeding 0.1 mol ppm, and having a $H_2O$ content of 5.0 mol % or less, with an ammonia removal material comprising zeolite having a pore size, measured as described in "Pore Size of Zeolite" in the description, of 0.5 nm or more and 2.0 nm or less, wherein the content of the zeolite having a pore size of 0.5 nm or more and 2.0 nm or less in the ammonia removal material is 50% by mass or more.
[2] The ammonia removal method as set forth above in [1], wherein the temperature in the step (1) is 30 °C or lower.
[3] The ammonia removal method as set forth above in [1] or [2], comprising a step of obtaining the mixed gas (A) by decomposing ammonia at a decomposition temperature of 450°C or higher and 600°C or lower, before the step (1).
[4] The ammonia removal method as set forth above in [3], wherein the mixed gas (A) is obtained by decomposing ammonia by an ammonia decomposition method other than an autothermal system.
[5] The ammonia removal method as set forth above in any of [1] to [4], wherein a crystal structure of the zeolite is at least one selected from the group consisting of an LTA type, an FAU type, a BEA type, an LTL type, an MFI type, an MWW type, an FER type, and an MOR type as a structural code.
[6] The ammonia removal method as set forth above in any of [1] to [5], wherein a crystal structure of the zeolite is at least one selected from the group consisting of an A type, an X type, a β type, a Y type, an L type, a ZSM-5 type, an MCM-22 type, a ferrierite type, and a mordenite type.
[7] The ammonia removal method as set forth above in any of [1] to [6], wherein a crystal structure of the zeolite is an X type.
[8] The ammonia removal method as set forth above in any of [1] to [7], wherein the zeolite comprises as a cation at least one selected from a hydrogen ion, a lithium ion, a calcium ion, a sodium ion, a potassium ion, a magnesium ion, and a barium ion.
[9] The ammonia removal method as set forth above in any of [1] to [8], wherein an ammonia content of the mixed gas (A) in the step (1) is 2,000 mol ppm or less.

[10] A method for producing a hydrogen gas for a fuel cell automobile, the method comprising the ammonia removal method as set forth above in any of [1] to [9].

Advantageous Effects of Invention

According to the present invention, an ammonia removal method that make it possible to obtain a mixed gas (B) having an ammonia concentration of 0.1 mol ppm or less in a highly efficient manner from a mixed gas (A) comprising hydrogen, nitrogen, and ammonia, having an ammonia concentration exceeding 0.1 mol ppm, and having a $H_2O$ content of 5.0 mol% or less, and a method for producing a hydrogen gas for a fuel cell automobile, the method comprising the ammonia removal method, can be provided.

Description of Embodiments

Hereinafter, the present invention will be described in detail, but the present invention is not limited to embodiments described below.

[Ammonia Removal Material]

An ammonia removal material for use in a method according to the present invention is an ammonia removal material to be used for obtaining a mixed gas (B) having an ammonia concentration of 0.1 mol ppm or less from a mixed gas (A) comprising hydrogen, nitrogen, and ammonia, having an ammonia concentration exceeding 0.1 mol ppm, and having a $H_2O$ content of 5.0 mol% or less, the ammonia removal material comprising zeolite having a pore size of 0.5 nm or more and 2.0 nm or less.

By using the ammonia removal material comprising zeolite having the pore size for use in the present invention, the mixed gas (B) can be obtained in a highly efficient manner from the mixed gas (A).

That "the mixed gas (B) can be obtained in a highly efficient manner" herein more specifically means that the ammonia removal material is excellent in ammonia adsorption ability and the mixed gas (B) can be obtained from the mixed gas (A) for long hours.

For example, as shown in Examples described later, the ammonia removal material according to the present invention is excellent in ammonia adsorption ability and has a long lifetime, and therefore "breakthrough time" that indicates a time during which the mixed gas (B) can be supplied after contacting the mixed gas (A) with the ammonia removal material becomes long. Therefore, frequency of exchanging the ammonia removal material is decreased and a running time for obtaining the mixed gas (B) can be secured for long hours, so that running cost for obtaining the mixed gas (B) can also be decreased. Accordingly, the ammonia removal material according to the present invention is industrially advantageous.

It is to be noted that in the present specification, the term "mol%" or "mol ppm" written as a composition of each component in the mixed gas (gas) has the same meaning as the term "% by volume" or "ppm by volume".

<Zeolite>

Generally, zeolite is a generic name for crystalline aluminosilicates, and zeolite for use in the present invention has a pore size of 0.5 nm or more and 2.0 nm or less. When the zeolite has a pore size of less than 0.5 nm, the mixed gas (B) cannot be obtained in a highly efficient manner even when the mixed gas (A) is contacted with the ammonia removal material comprising the zeolite. From such a viewpoint, the zeolite preferably has a pore size of 0.6 nm or more, more preferably 0.7 nm or more, and still more preferably 0.8 nm or more. In addition, from the viewpoint of availability, the zeolite preferably has a pore size of 1.9 nm or less, more preferably 1.7 nm or less, and still more preferably 1.5 nm or less.

The pore size of the zeolite herein is a value calculated by the method described in Examples which will be described later.

(Crystal Structure of Zeolite)

Generally, a basic unit of a crystal structure (also referred to as "skeleton structure") of zeolite is a tetrahedron comprising four oxygen atoms surrounding a silicon atom or an aluminum atom, and such tetrahedrons lie in three-dimensional directions to form the crystal structure.

The crystal structure of zeolite for use in the present invention is not particularly limited as long as the above-described pore size is satisfied, and examples thereof include various crystal structures represented by structural codes which are composed of three letters of the alphabet specified by the International Zeolite Association. Examples of the structural codes include codes such as LTA, FER, MWW, MFI, MOR, LTL, FAU, and BEA. In addition, a suitable crystal structure for use in the present invention, when expressed by the name of the crystal structure, is preferably at least one selected from the group consisting of an A type, an X type, a β type, a Y type, an L type, a ZSM-5 type, an MCM-22 type, a ferrierite type, and a mordenite type, more preferably at least one selected from the group consisting of an A type, an X type, and a Y type, and still more preferably an X type or a Y type.

Generally, zeolite has a cation in the crystal structure thereof, and the cation covers a shortage of a positive charge by compensating for a negative charge in the crystal structure composed of the aluminosilicate.

Zeolite for use in the present invention is not particularly limited as long as the above-described pore size is satisfied, and the zeolite preferably comprises as the cation at least one selected from the group consisting of a hydrogen ion, a lithium ion, a calcium ion, a sodium ion, a potassium ion, a magnesium ion, and barium ion. The zeolite more preferably comprises as the cation at least one selected from the group consisting of a hydrogen ion, a lithium ion, a calcium ion, a sodium ion, and a potassium ion, and still more preferably comprises as the cation at least one selected from the group consisting of a hydrogen ion, a lithium ion, a calcium ion, and sodium ion.

Zeolite for use in the present invention is not particularly limited as long as the pore size is satisfied, and zeolite obtained by appropriately combining the crystal structure and the cation may be used, but, for example, in the case where zeolite whose crystal structure is the X type is used, the zeolite is preferably zeolite comprising as the cation at least one selected from the group consisting of a lithium ion, a calcium ion, and a sodium ion, more preferably zeolite comprising as the cation at least one selected from the group consisting of a lithium ion and a calcium ion, and still more preferably zeolite comprising a lithium ion as the cation from the viewpoint of obtaining the mixed gas (B) in a highly efficient manner by contacting the mixed gas (A) with the ammonia removal material comprising zeolite.

In addition, from the same viewpoint, in the case where zeolite whose crystal structure is the Y type is used, the zeolite preferably comprises as the cation at least one selected from the group consisting of a hydrogen ion, a sodium ion, a lithium ion and a calcium ion, and more preferably comprises a hydrogen ion.

Further, from the same viewpoint, in the case where zeolite whose crystal structure is the A type is used, the zeolite preferably comprises as the cation at least one selected from the group consisting of a lithium ion and a calcium ion.

The content of the zeolite having a pore size of 0.5 nm or more and 2.0 nm or less in the ammonia removal material according to the present invention is 50% by mass or more, more preferably 70% by mass or more, still more preferably 80% by mass or more, further still more preferably 90% by mass or more, and is preferably 100% by mass or less from the viewpoint of obtaining the mixed gas (B) in a highly efficient manner from the mixed gas (A).

In addition, the content of the zeolite having a pore size of 0.5 nm or more and 2.0 nm or less in the whole zeolite (total amount of the zeolite having a pore size of 0.5 nm or more and 2.0 nm or less and zeolite other than the zeolite having a pore size of 0.5 nm or more and 2.0 nm or less) in the ammonia removal material according to the present invention is preferably 90% by mass or more, more preferably 95% by mass or more, still more preferably 98% by mass or more, and is further still more preferably 100% by mass or less, and further still more preferably 100% from the viewpoint of obtaining the mixed gas (B) in a highly efficient manner from the mixed gas (A).

<Other Components>

Components that are contained in the ammonia removal material and that are other than the zeolite having a pore size of 0.5 nm or more and 2.0 nm or less are not particularly limited as long as the effects of the present invention are exhibited, and, if necessary, the ammonia removal material may comprise a binder component, a molding auxiliary, and the like in a range where the object of the present invention is not impaired, and may also comprise zeolite other than the zeolite having a pore size of 0.5 nm or more and 2.0 nm or less.

The shape of the ammonia removal material according to the present invention is not particularly limited as long as the effects of the present invention are exhibited, and examples thereof include columnar (pellet), spherical (bead), honeycomb, granular, finely granular, and powdery (powder) shapes. The ammonia removal material according to the present invention, when used as a molded body having any shape of the above-described shapes, is generally molded mixing the zeolite component, a binder component, and water. The binder component is not particularly limited, and examples thereof include clay minerals (kaolin-based, attapulgite-based, sepiolite-based, bentonite-based, talc-based, pyrophyllite-based, molysite-based, vermiculite-based, montmorillonite-based, chlorite-based, and halloysite-based clay), silicon components (such as silica sol, silicon hydroxide, and solid reactive silica) such as silica, and aluminum components (such as alumina sol, aluminum hydroxide, and aluminum oxide). In addition, these binder components may be converted into a zeolite crystal by modification (to make ammonia removal material binderless). Further, according to circumstances, for example, a molding auxiliary such as carboxymethyl cellulose may be added for molding.

The content of the other components in the ammonia removal material according to the present invention is less than 50% by mass, more preferably 30% by mass or less, still more preferably 20% by mass or less, and further still more preferably 10% by mass or less from the viewpoint of obtaining the mixed gas (B) in a highly efficient manner from the mixed gas (A).

<Mixed Gas (A) Comprising Hydrogen, Nitrogen, and Ammonia and Having Ammonia Concentration exceeding 0.1 mol ppm>

The mixed gas (A) for use in the present invention comprising hydrogen, nitrogen, and ammonia, having an ammonia concentration exceeding 0.1 mol ppm and having a $H_2O$ content of 5.0 mol% or less, is preferably a mixed gas derived from a decomposition gas which is obtained by decomposing ammonia and which comprises hydrogen, nitrogen, and ammonia, more preferably a mixed gas comprising hydrogen, nitrogen, and ammonia each derived from a decomposition gas that is obtained by decomposing ammonia at a decomposition temperature of 450°C or higher and 600°C or lower, and still more preferably a mixed gas comprising hydrogen, nitrogen, and ammonia each derived from a decomposition gas that is obtained by decomposing ammonia at a decomposition temperature of 500°C or higher and 550°C or lower.

In addition, the ammonia content in the mixed gas (A) is preferably 2,000 mol ppm or less, more preferably 1,500 mol ppm or less, and still more preferably 1,000 mol ppm or less based on the total amount of the mixed gas (A).

In addition, the hydrogen content in the mixed gas (A) is preferably 60 mol% or more, more preferably 70 mol% or more, and still more preferably 75 mol% or more based on the total amount of the mixed gas (A).

In addition, the nitrogen content in the mixed gas (A) is preferably 40 mol% or less, more preferably 30 mol% or less, and still more preferably 25 mol% or less based on the total amount of the mixed gas (A).

The content of the moisture ($H_2O$) in the mixed gas (A) is 5.0 mol% or less, more preferably 1.0 mol% or less, still more preferably 1,000 mol ppm or less, further still more preferably 100 mol ppm or less, further still more preferably 20 mol ppm or less, further still more preferably 10 mol ppm or less, and further still more preferably 1.0 mol ppm or less based on the total amount of the mixed gas (A).

The contents of respective components in the mixed gas (A) herein are values measured and calculated by the methods described in Examples which will be described later.

<Mixed Gas (B) Having Ammonia Concentration of 0.1 mol ppm or less>

The mixed gas (B) which is obtained using the ammonia removal material according to the present invention and which has an ammonia concentration of 0.1 mol ppm or less is a mixed gas which is obtained by contacting the mixed gas (A) with the ammonia removal material according to the present invention. The ammonia concentration in the mixed gas (B) is preferably 0.08 mol ppm or less, more preferably 0.075 mol ppm or less, still more preferably 0.07 mol ppm or less, further still more preferably 0.05 mol ppm or less, and further still more preferably 0 mol ppm.

The ammonia concentration (ammonia content) in the mixed gas (B) herein is a value measured and calculated by the same method as the method for measuring the ammonia concentration (ammonia content) in the mixed gas (A).

[Ammonia Removal Method]

An ammonia removal method according to the present invention is an ammonia removal method that removes ammonia so as to obtain a mixed gas (B) having an ammonia concentration of 0.1 mol ppm or less from a mixed gas (A) comprising hydrogen, nitrogen, and ammonia, having an ammonia concentration exceeding 0.1 mol ppm, and having a $H_2O$ content of 5.0 mol% or less, the ammonia removal method comprising the following step (1):
Step (1): a step of contacting the mixed gas (A) comprising hydrogen, nitrogen, and ammonia, having an ammonia concentration exceeding 0.1 mol ppm, and having a $H_2O$ content of 5.0 mol% or less, with an ammonia removal material comprising zeolite having a pore size of 0.5 nm or more and 2.0 nm or less, wherein the content of the zeolite having a pore size of 0.5 nm or more and 2.0 nm or less in the ammonia removal material is 50% by mass or more.

<Step (1)>

The step (1) of the ammonia removal method according to the present invention is a step of contacting the mixed gas (A) with an ammonia removal material comprising zeolite having a pore size of 0.5 nm or more and 2.0 nm or less.

By using the ammonia removal material comprising zeolite having a pore size of 0.5 nm or more and 2.0 nm or less in the step (1), the mixed gas (B) can be obtained in a highly efficient manner from the mixed gas (A).

Examples of the method of contacting the mixed gas (A) with the ammonia removal material include a method of contacting the mixed gas (A) with the ammonia removal material by introducing the mixed gas (A) into or allowing the mixed gas (A) to pass through a container in which the ammonia removal material is packed in advance or a structure (example, honeycomb structure or the like) on which the ammonia removal material is carried or applied.

The temperature in the step (1) is preferably -10°C or higher, more preferably 0°C or higher, and still more preferably 10°C or higher, and is preferably 50°C or lower, more preferably 30°C or lower from the viewpoint of adsorption equilibrium, adsorption rate, and economic efficiency.

In addition, the pressure of the mixed gas (A) in supplying the mixed gas (A) into the step (1) is preferably 0.0001 MPa (abs) or more, more preferably 0.001 MPa (abs) or more, still more preferably 0.01 MPa (abs) or more, and further still more preferably 0.1 MPa or more, and is preferably 10 MPa (abs) or less, more preferably 5.0 MPa (abs) or less, and still more preferably 1.0 MPa (abs) or less from the viewpoint of adsorption equilibrium, adsorption rate, and economic efficiency.

In addition, the amount of the mixed gas (A) to be supplied into the step (1) is preferably 1,000 $h^{-1}$ or more, more preferably 5,000 $h^{-1}$ or more, and still more preferably 10,000$h^{-1}$ or more in terms of space velocity (also referred to as "SV". Unit is inverse of time (hour).) equivalent at 0°C from the viewpoint of adsorption equilibrium, adsorption rate, and economic efficiency, and is preferably 100,000 $h^{-1}$ or less, more preferably 80,000 $h^{-1}$ or less, and still more preferably 50,000 $h^{-1}$ or less.

(Ammonia Removal Material)

An ammonia removal material for use in the ammonia removal method according to the present invention is the above-described ammonia removal material, and the suitable aspects are also as described above.

(Mixed Gas (A) Comprising Hydrogen, Nitrogen, and Ammonia and Having Ammonia Concentration exceeding 0.1 mol ppm)

A mixed gas (A) for use in the ammonia removal method according to the present invention, the mixed gas (A) comprising hydrogen, nitrogen, ammonia and optionally water, is synonymous with the mixed gas (A) described in the ammonia removal material according to the present invention. Suitable aspects of the mixed gas (A) are also as described above, and the mixed gas (A) for use in the ammonia removal method according to the present invention is preferably a mixed gas derived from a decomposition gas which is obtained by decomposing ammonia and which comprises hydrogen, nitrogen, and ammonia, more preferably a mixed gas comprising hydrogen, nitrogen, and ammonia each derived from a decomposition gas that is obtained by decomposing ammonia at a decomposition temperature of 450°C or higher and 600°C or lower, and still more preferably a mixed gas comprising hydrogen, nitrogen, and ammonia each derived from a decomposition gas that is obtained by decomposing ammonia at a decomposition temperature of 500°C or higher and 550°C or lower.

The decomposition of ammonia can be represented by the following equation (a).

$$NH_3 \rightarrow (1/2)\, N_2 + (3/2)\, H_2 \qquad (a)$$

The ammonia decomposition reaction is a chemical equilibrium reaction, the higher the temperature is, the higher the conversion rate of ammonia is, and the conversion rate of ammonia reaches about 98.2 to about 99.9% under conditions of an equilibrium pressure of 0.1 MPa and 300 to 650°C (conversion rate of ammonia in chemical equilibrium state calculated using "HSC Chemistry 6.0" manufactured by Outotec).

In addition, the suitable contents of respective components in the mixed gas (A) comprising hydrogen, nitrogen, and ammonia, the suitable contents including the moisture content, are as described above, and, for example, a mixed gas (A) derived from a decomposition gas in which ammonia has been decomposed by an ammonia decomposition method other than an autothermal system where ammonia and oxygen react to produce water (steam) is preferably used in order to satisfy the suitable contents.

For example, in the case where ammonia is decomposed by the autothermal system, the moisture content in the mixed gas (A) is increased, and therefore there is a risk that the ammonia removal material adsorbs the moisture and the amount of ammonia which the ammonia removal material can remove from the mixed gas (A) is reduced. Therefore, it is necessary to use a large amount of zeolite and to increase the frequency of regeneration, which are extremely disadvantageous from an economical viewpoint. Accordingly, ammonia is preferably decomposed by an ammonia decomposition method other than the autothermal system.

Further, to obtain the mixed gas (A) which is obtained by decomposing ammonia, a catalyst for accelerating the ammonia decomposition reaction represented by the equation (a) is preferably used. The catalyst is not particularly limited as long as it has catalytic activity to the ammonia decomposition reaction represented by the equation (a) and exhibits the effects of the present invention, and examples thereof include catalysts comprising as a composition a non-noble metal series transition metal (such as iron, cobalt, nickel, or molybdenum), any of rare earth series (such as lanthanum, cerium, or neodymium), or any of noble metal series (such as ruthenium, rhodium, iridium, palladium, or platinum). The non-noble metal series transition metals can be used as a single metal, an alloy, a nitride, a carbide, an oxide, and a composite oxide, the rare earth series can be used as an oxide, and both the non-noble metal series transition metals and the rare earth series can be used by being carried on a carrier having a high specific surface area, such as alumina, silica, magnesia, zirconia, or titania. In addition, the noble metal series can also be used by being carried on a carrier having a high specific surface area, such as alumina, silica, magnesia, zirconia, or titania. Further, a small amount of the noble metal series can be contained and used in at least one selected from the group consisting of the non-noble metal series transition metals and the rare earth series. These catalysts can be used singly, or two or more thereof may be used together.

In the case where the mixed gas (A) derived from a decomposition gas in which ammonia has been decomposed is used as the mixed gas (A) for use in the ammonia removal method according to the present invention, the temperature condition in the ammonia decomposition reaction for obtaining the decomposition gas in which ammonia has been decomposed is preferably 300°C or higher and 800°C or lower. The temperature condition in the ammonia decomposition reaction is more preferably 450°C or higher, still more preferably 500°C or higher, and is more preferably 600°C or lower, still more preferably 550°C or lower from the viewpoint of making it possible to use even a stainless steel (SUS) material having a heatproof temperature of 600°C or lower as a material for the equipment (such as a container and a pipe) that is used for the ammonia decomposition reaction.

In addition, the pressure condition during the ammonia decomposition reaction is preferably 0.01 MPa (abs) or more, more preferably 0.05 MPa (abs) or more, and still more preferably 0.10 MPa (abs) or more, and is preferably 1.0 MPa (abs) or less, more preferably 0.75 MPa (abs) or less, and still more preferably 0.50 MPa (abs) or less.

Further, in the case where ammonia is decomposed under a condition of 450°C or higher and 600°C or lower to achieve a high conversion rate of ammonia, a catalyst comprising at least one selected from the group consisting of nickel, ruthenium, and rhodium is preferably used among the examples of the catalyst that can be used for the ammonia decomposition, and a catalyst comprising ruthenium (ruthenium-based catalyst) is more preferably used. In the case where the ruthenium-based catalyst is used, the conversion rate of ammonia at which the ammonia decomposition reaction is in an equilibrium state is easily achieved even under a condition of a decomposition temperature of 550°C or lower.

(Mixed Gas (B) Having Ammonia Concentration of 0.1 mol ppm or less)

A mixed gas (B) that is obtained using the ammonia removal method according to present invention, the mixed gas (B) having an ammonia concentration of 0.1 mol ppm or less, is synonymous with the mixed gas (B) described in the ammonia removal material according to the present invention, and suitable aspects of the mixed gas (B) are also as described above.

[Application of Ammonia Removal Material and Ammonia Removal Method]

As described above, since the mixed gas (B) can be obtained in a highly efficient manner from the mixed gas (A), the ammonia removal method according to the present invention can be used suitably as an ammonia removal method for use in a method for producing a hydrogen gas for a fuel cell (suitably, solid polymer fuel cell comprising proton exchange membrane) for which high-purity hydrogen is required. The ammonia removal method can be used more suitably for a method for producing a hydrogen gas for a fuel cell automobile for which high-purity hydrogen having an ammonia concentration of 0.1 mol ppm or less is required. In addition, the ammonia removal method according to the present invention may be used for a method for producing a hydrogen gas for a fuel cell for use in ships and railroads.

It is to be noted that the term "fuel cell automobile" in the present specification includes vehicles that can run on public roads (including private vehicles and business-use vehicles such as buses and taxis; moreover, including all vehicles such as four-wheeled vehicles and two-wheeled vehicles.) and industrial vehicles such as a fork lift truck.

[Method for Producing Crude Hydrogen Gas for Use in Production of Hydrogen Gas for Fuel Cell Automobile]

A method for producing a crude hydrogen gas for use in production of a hydrogen gas for a fuel cell automobile, the method being one aspect according to the present invention, is a method for producing a crude hydrogen gas for use in production of a hydrogen gas for a fuel cell automobile, the crude hydrogen gas having an ammonia concentration of 0.1 mol ppm or less, and is a method for producing a crude hydrogen gas for use in production of a hydrogen gas for a fuel cell automobile, the method comprising the above-described ammonia removal method according to the present invention. It is to be noted that suitable aspects of the ammonia removal method to be used in the method for producing a crude hydrogen gas for use in the production of a hydrogen gas for a fuel cell automobile are the same as the suitable aspects of the ammonia removal method according to the present invention and are as described above.

[Method for Producing Hydrogen Gas for Fuel Cell Automobile]

The method for producing a hydrogen gas for a fuel cell automobile according to the present invention is a method comprising the ammonia removal method according to the present invention.

The method for producing a hydrogen gas for a fuel cell automobile according to the present invention may be a method for producing a hydrogen gas for a fuel cell automobile, the method comprising a hydrogen purification step for removing impurities such as nitrogen after the above-described ammonia removal method according to the present invention, or may be a method for producing a hydrogen gas for a fuel cell automobile, the method comprising a mixed gas (A) purification step for removing impurities such as nitrogen before the above-described ammonia removal method according to the present invention. Moreover, the method for producing a hydrogen gas for a fuel cell automobile according to the present invention may be a method for producing a hydrogen gas for a fuel cell automobile, the method comprising a mixed gas (A) purification step for removing impurities such as nitrogen before the above-described ammonia removal method according to the present invention and further comprising a hydrogen purification step for removing impurities such as nitrogen after the above-described ammonia removal method according to the present invention.

By using the ammonia removal method, high-purity hydrogen having a low ammonia content with an ammonia concentration of 0.1 mol ppm or less, or high-purity hydrogen not containing ammonia can be produced. It is to be noted that suitable aspects of the ammonia removal method for use in the method for producing a hydrogen gas for a fuel cell automobile according to the present invention are similar to suitable aspects of the ammonia removal method according to the present invention and are as described above.

<Hydrogen Purification Step>

The hydrogen purification step is not particularly limited as long as it is a step comprising a method by which hydrogen that can be used as a hydrogen gas for a fuel cell automobile can be supplied; however, the hydrogen purification step is preferably a step, for example, by which a hydrogen gas for a fuel cell automobile, the hydrogen gas satisfying a hydrogen gas composition as specified in the international standard ISO 14687-2, is obtained.

Examples of the method of purifying hydrogen include general purification methods such as a pressure swing method (PSA method) in which a gas to be treated is introduced into a container or the like in which a substance that selectively adsorbs a particular component from a gas, such as zeolite (the type of zeolite is not particularly limited) or activated carbon, is filled, and separation is performed by increasing/decreasing pressure, a temperature swing method in which the separation is performed by increasing/decreasing temperature, and a pressure/temperature swing method in which the pressure and the temperature are swung. Moreover, examples of the method of purifying hydrogen also include a method in which the pressure is increased by a compressor or the like, nitrogen in a gas is then liquefied under an extremely low temperature by a gas-liquid separator to perform gas-liquid separation of nitrogen from hydrogen, and the separated hydrogen gas is allowed to pass through an adsorption/purification column, thereby removing residual nitrogen, and a membrane separation method using a palladium permeable membrane or the like.

<Mixed Gas (A) Purification Step>

The mixed gas (A) purification step is not particularly limited as long as it is a method which is other than the ammonia removal method and by which impurities such as nitrogen can be removed from the mixed gas (A), and, for example, the methods which are similar to those described in the hydrogen purification step can be used.

Examples

Hereinafter, the present invention will be described in more detail with Examples, but the present invention is not limited by these examples.

<Decomposition of Ammonia>

Ammonia (product name "ECOANN (a registered trademark)", manufactured by Showa Denko K.K.) was decomposed by heating under conditions of a pressure of 0.1 MPa (abs) and a temperature of 525°C in the presence of a carried ruthenium catalyst [Ru (3 wt%)/MgO (containing 3 wt% of Ru based on total amount of catalyst; MgO was used as carrier.)] to obtain a mixed gas (A) comprising hydrogen, nitrogen, and ammonia.

The compositions of the mixed gas (A) obtained (compositions of hydrogen and nitrogen, and moisture content (concentration)) were measured using the methods described below. The obtained results are shown in Table 1 below.

(Measurement of Hydrogen ($H_2$) Content)

The hydrogen content of the mixed gas (A) was determined by a value obtained by subtracting the contents of nitrogen, ammonia, and water, which are described below, from 100 mol%.

(Measurement of Nitrogen ($N_2$) Content)

The nitrogen content of the mixed gas (A) was measured by a method using a gas chromatograph mass analyzer in accordance with JIS K0123:2006.

(Measurement of Ammonia ($NH_3$) Content)

The ammonia content of the mixed gas (A) was measured by the apparatus described below under the conditions described below.

Measurement apparatus: Fourier transform infrared spectrophotometer (FT-IR) (product name "Frontier", manufactured by PerkinElmer Inc.)
Cell used: manufactured by Specac Limited, long light path cell, cell path length = 10 m
Detector: MCT detector
Resolution: 1 cm$^{-1}$
Measurement wavenumbers: 967.74 to 957.03 cm$^{-1}$, 938.53 to 920.30 cm$^{-1}$
Integration time: 5 minutes

(Measurement of Water (Moisture Content))

The moisture content of the mixed gas (A) is a calculated value derived from a moisture content originating from a raw material ammonia.

Table 1

| Composition of mixed gas (A) | |
| --- | --- |
| Hydrogen ($H_2$) | 75 mol% (75% by volume) |
| Nitrogen ($N_2$) | 25 mol% (25% by volume) |
| Ammonia ($NH_3$) | 1,000 mol ppm (1,000 ppm by volume) |
| Water ($H_2O$) | 0.64 mol ppm (0.64 ppm by volume) |

<Removal of Ammonia>

Example 1

An ammonia removal tube was prepared in which 100 mg of an ammonia removal material, which comprises zeolite having a pore size of 0.9 nm, (product name "ZEOLUM (a registered trademark)", manufactured by Tosoh Corporation, shape of molded body = pellet (1.5 mm$\phi$); crystal structure of zeolite = X type, cation = calcium ion (in Table 2 below, represented by "Ca-X", and the "Ca-X" denotes a combination of "type of cation-crystal structure".)) was packed in a cylindrical container having a diameter of 8.3 mm and a height of 26 mm.
The mixed gas (A), which was obtained through the decomposition of ammonia and which contains hydrogen, nitrogen, and ammonia, was allowed to pass through the ammonia removal tube adjusting a flow rate equivalent at 0°C to 50 mL/min (space velocity SV = 15,000 h$^{-1}$) under conditions of a temperature of 25°C and a pressure of 0.1 to 0.2 MPa (abs).
The ammonia concentration in the mixed gas (A) was measured after the mixed gas (A) was allowed to pass through the ammonia removal tube by the same method as the above-described method for measuring the ammonia concentration in the mixes gas (A). The time when the mixed gas (B) which first passed through the ammonia removal tube and which had an ammonia concentration of 0.07 mol ppm or less was measured was set as 0 minute, and the time when the ammonia content exceeded 0.07 mol ppm was recorded as breakthrough time.
The amount of ammonia adsorbed in the ammonia removal material (% by mass) was calculated from the breakthrough time using the following expression (I).

Expression (I): amount of ammonia adsorbed in ammonia removal material (% by mass) = flow velocity of ammonia decomposition gas (mixed gas (A)) (standard state mL/min) × breakthrough time (minutes) × ammonia concentration in mixed gas (A) (ppm) × $10^{-6}$ ÷ 22,400 (mL) × molecular weight of ammonia (g/mol) ÷ mass of ammonia removal material (g) × 100

Examples 2 to 7 and Comparative Examples 1 and 2

The breakthrough time and the amount of ammonia adsorbed in zeolite (% by mass) were calculated using the same methods as those in Example 1 except that the zeolite in the ammonia removal material used was changed to zeolite having a pore size as shown in Table 2.

Details on zeolites in ammonia removal materials each used as the ammonia removal material, described in Table 2, in Examples and Comparative Examples are as follows.

<Types of Zeolite>

- "Li-X": crystal structure = X type, cation = lithium ion, pore size = 0.9 nm,; product name "ZEOLUM (a registered trademark)", manufactured by Tosoh Corporation, shape of molded body = pellet (1.5 mmφ)
- "Ca-X": crystal structure = X type, cation = calcium ion, pore size = 0.9 nm,; product name "ZEOLUM (a registered trademark)", manufactured by Tosoh Corporation, shape of molded body = pellet (1.5 mmφ)
- "Na-X": crystal structure = X type, cation = sodium ion, pore size = 0.9 nm,; product name "ZEOLUM (a registered trademark)", manufactured by Tosoh Corporation, shape of molded body = pellet (1.5 mmφ)
- "Ca-A": crystal structure = A type, cation = calcium ion, pore size = 0.5 nm,; product name "ZEOLUM (a registered trademark)", manufactured by Tosoh Corporation, shape of molded body = pellet (1.5 mmφ)
- "Na-A"; crystal structure = A type, cation = sodium ion, pore size = 0.4 nm,; product name "ZEOLUM (a registered trademark)", manufactured by Tosoh Corporation, shape of molded body = pellet (1.5 mmφ)
- "K-A": crystal structure = A type, cation = potassium ion, pore size = 0.3 nm,; product name "ZEOLUM (a registered trademark)", manufactured by Tosoh Corporation, shape of molded body = pellet (1.5 mmφ)
- "H-Y 4.8": crystal structure = Y type, cation = hydrogen ion, pore size = 0.9 nm,; product name "HSZ (a registered trademark)", manufactured by Tosoh Corporation, shape of molded body = pellet (1.5 mmφ)
- "H-Y 5.3": crystal structure = Y type, cation = hydrogen ion, pore size = 0.9 nm,; product name "HSZ (a registered trademark)", manufactured by Tosoh Corporation, shape of molded body = pellet (1.5 mmφ)
- "H-Y 5.6": crystal structure = Y type, cation = hydrogen ion, pore size = 0.9 nm,; product name "HSZ (a registered trademark)", manufactured by Tosoh Corporation, shape of molded body = pellet (1.5 mmφ)

<Pore Size of Zeolite>

The pore size of zeolites, described in Table 2, which were used in Examples and Comparative Examples was measured using the method described below.

Measurement apparatus: High precision gas/vapor adsorption measurement instrument (trade name "BELSORP-max", manufactured by MicrotracBEL Corp.)
Measurement principle: volumetric gas adsorption method
Measurement condition: argon adsorption isotherm measurement at liquid nitrogen temperature (77 K)

Table 2

|  | Zeolite type | Pore size [nm] | Breakthrough time [minutes] | Amount of ammonia adsorbed [% by mass] |
|---|---|---|---|---|
| Example 1 | Ca-X | 0.9 | 152 | 5.8 |

(continued)

|  | Zeolite type | Pore size [nm] | Breakthrough time [minutes] | Amount of ammonia adsorbed [% by mass] |
|---|---|---|---|---|
| Example 2 | Li-X | 0.9 | 162 | 6.2 |
| Example 3 | Na-X | 0.9 | 143 | 5.5 |
| Example 4 | Ca-A | 0.5 | 139 | 5.3 |
| Example 5 | H-Y 4.8 | 0.9 | 97 | 3.7 |
| Example 6 | H-Y 5.3 | 0.9 | 168 | 6.4 |
| Example 7 | H-Y 5.6 | 0.9 | 100 | 3.8 |
| Comparative Example 1 | Na-A | 0.4 | 16 | 0.62 |
| Comparative Example 2 | K-A | 0.3 | 15 | 0.56 |

<Results>

From a comparison between Examples 1 to 7 and Comparative Examples 1 and 2, it was ascertained that the ammonia removal material according to the present invention having a pore size of 0.5 nm or more and 2.0 nm or less in Examples 1 to 7 is extremely excellent in ability of adsorbing ammonia from the mixed gas (A) comprising hydrogen, nitrogen, and ammonia. From the result, it was ascertained that the ammonia removal material comprising any of zeolites used in Examples 1 to 7 is useful for obtaining the mixed gas (B) having an ammonia concentration of 0.07 mol ppm or less.

On the other hand, it was ascertained that in Comparative Examples 1 and 2, the ability of adsorbing ammonia from the mixed gas (A) comprising hydrogen, nitrogen, and ammonia is inferior to that in each of Examples because zeolite having a pore size of less than 0.5 nm is used.

Industrial Applicability

By using the ammonia removal method according to the present invention, the mixed gas (B) having an ammonia concentration of 0.1 mol ppm or less can be obtained in a highly efficient manner from the mixed gas (A) comprising hydrogen, nitrogen, and ammonia, having an ammonia concentration exceeding 0.1 mol ppm, and having a $H_2O$ content of 5.0 mol% or less. The mixed gas (B) having an extremely low ammonia concentration, as low as 0.1 mol ppm or less, can be obtained in a highly efficient manner, and therefore the ammonia removal method according to the present invention is particularly suitable as an ammonia removal method for the method for producing a hydrogen gas for a fuel cell automobile for which high-purity hydrogen is required.

**Claims**

1. An ammonia removal method that removes ammonia so as to obtain a mixed gas (B) having an ammonia concentration of 0.1 mol ppm or less from a mixed gas (A) comprising hydrogen, nitrogen, and ammonia, having an ammonia concentration exceeding 0.1 mol ppm, and having a $H_2O$ content of 5.0 mol% or less, the ammonia removal method comprising the following step (1):
Step (1): a step of contacting the mixed gas (A) comprising hydrogen, nitrogen, and ammonia, having an ammonia concentration exceeding 0.1 mol ppm, and having a $H_2O$ content of 5.0 mol% or less, with an ammonia removal material comprising zeolite having a pore size, measured as described in "<Pore Size of Zeolite>" in the description, of 0.5 nm or more and 2.0 nm or less, wherein the content of the zeolite having a pore size of 0.5 nm or more and 2.0 nm or less in the ammonia removal material is 50% by mass or more.

2. The ammonia removal method according to claim 1, wherein the temperature in the step (1) is 30 °C or lower.

3. The ammonia removal method according to claim 1 or 2, comprising a step of obtaining the mixed gas (A) by decomposing ammonia at a decomposition temperature of 450°C or higher and 600°C or lower, before the step (1).

4. The ammonia removal method according to claim 3, wherein the mixed gas (A) is obtained by decomposing ammonia by an ammonia decomposition method other than an autothermal system.

5. The ammonia removal method according to any one of claims 1 to 4, wherein a crystal structure of the zeolite is at least one selected from the group consisting of an LTA type, an FAU type, a BEA type, an LTL type, an MFI type, an MWW type, an FER type, and an MOR type as a structural code.

6. The ammonia removal method according to any one of claims 1 to 5, wherein a crystal structure of the zeolite is at least one selected from the group consisting of an A type, an X type, a β type, a Y type, an L type, a ZSM-5 type, an MCM-22 type, a ferrierite type, and a mordenite type.

7. The ammonia removal method according to any one of claims 1 to 6, wherein a crystal structure of the zeolite is an X type.

8. The ammonia removal method according to any one of claims 1 to 7, wherein the zeolite comprises as a cation at least one selected from a hydrogen ion, a lithium ion, a calcium ion, a sodium ion, a potassium ion, a magnesium ion, and a barium ion.

9. The ammonia removal method according to any one of claims 1 to 8, wherein an ammonia content of the mixed gas (A) in the step (1) is 2,000 mol ppm or less.

10. A method for producing a hydrogen gas for a fuel cell automobile, the method comprising the ammonia removal method according to any one of claims 1 to 9.

**Patentansprüche**

1. Ammoniakentfernungsverfahren, bei der das Ammoniak so entfernt wird, dass man ein Mischgas (B) mit einer Ammoniakkonzentration von 0,1 Mol-ppm oder weniger aus einem Wasserstoff, Stickstoff und Ammoniak umfassenden Mischgas (A) mit einer Ammoniakkonzentration von mehr als 0,1 Mol-ppm und einem HzO-Gehalt von 5,0 mol% oder weniger, wobei das Ammoniakentfernungsverfahren den folgenden Schritt (1) umfasst:
Schritt (1): einen Schritt des In-Kontakt-Bringens des Mischgases (A), das Wasserstoff, Stickstoff und Ammoniak umfasst und eine Ammoniakkonzentration von mehr als 0,1 Mol-ppm und einen $H_2O$-Gehalt von 5,0 mol-% oder weniger aufweist, mit einem Ammoniakentfernungsmaterial, das Zeolith mit einer Porengröße, gemessen wie unter "<Porengröße von Zeolith>" in der Beschreibung beschrieben, von 0.5 nm oder mehr und 2,0 nm oder weniger, wobei der Gehalt des Zeoliths mit einer Porengröße von 0,5 nm oder mehr und 2,0 nm oder weniger in dem Ammoniakentfernungsmaterial 50 Massenprozent oder mehr beträgt.

2. Ammoniakentfernungsverfahren nach Anspruch 1, wobei die Temperatur in Schritt (1) 30 °C oder weniger beträgt.

3. Ammoniakentfernungsverfahren nach Anspruch 1 oder 2, das einen Schritt der Gewinnung des Mischgases (A) durch Zersetzung von Ammoniak bei einer Zersetzungstemperatur von 450 °C oder höher und 600 °C oder niedriger vor dem Schritt (1) umfasst.

4. Ammoniakentfernungsverfahren nach Anspruch 3, wobei das Mischgas (A) durch Zersetzung von Ammoniak mit einem anderen Verfahren als einem autothermen System erhalten wird.

5. Ammoniakentfernungsverfahren nach einem der Ansprüche 1 bis 4, wobei eine Kristallstruktur des Zeoliths mindestens eine ist, die aus der Gruppe ausgewählt ist, die aus einem LTA-Typ, einem FAU-Typ, einem BEA-Typ, einem LTL-Typ, einem MFI-Typ, einem MWW-Typ, einem FER-Typ und einem MOR-Typ als einem Strukturcode besteht.

6. Ammoniakentfernungsverfahren nach einem der Ansprüche 1 bis 5, wobei eine Kristallstruktur des Zeoliths mindestens eine ist, die ausgewählt ist aus der Gruppe bestehend aus einem A-Typ, X-Typ, β-Typ, Y-Typ, L-Typ, ZSM-5-Typ, MCM-22-Typ, Ferrierit-Typ und Mordenit-Typ.

**7.** Ammoniakentfernungsverfahren nach einem der Ansprüche 1 bis 6, wobei eine Kristallstruktur des Zeoliths vom X-Typ ist.

**8.** Ammoniakentfernungsverfahren nach einem der Ansprüche 1 bis 7, wobei der Zeolith als Kation mindestens eines umfasst, das unter einem Wasserstoffion, einem Lithiumion, einem Calciumion, einem Natriumion, einem Kaliumion, einem Magnesiumion und einem Bariumion ausgewählt ist.

**9.** Ammoniakentfernungsverfahren nach einem der Ansprüche 1 bis 8, wobei der Ammoniakgehalt des Mischgases (A) in Schritt (1) 2.000 Mol-ppm oder weniger beträgt.

**10.** Verfahren zur Herstellung eines Wasserstoffgases für ein Brennstoffzellenfahrzeug, wobei das Verfahren das Ammoniakentfernungsverfahren nach einem der Ansprüche 1 bis 9 umfasst.


**Revendications**

**1.** Procédé d'élimination d'ammoniac qui élimine de l'ammoniac de façon à obtenir un gaz mixte (B) présentant une concentration d'ammoniac de 0,1 ppm en moles ou moins à partir d'un gaz mixte (A) comprenant de l'hydrogène, de l'azote et de l'ammoniac, présentant une concentration d'ammoniac dépassant 0,1 ppm en moles, et présentant une teneur en $H_2O$ de 5,0 % moles ou moins, le procédé d'élimination d'ammoniac comprenant l'étape suivante (1) .
Étape (1) : une étape de mise en contact du gaz mixte (A) comprenant de l'hydrogène, de l'azote et de l'ammoniac, présentant une concentration d'ammoniac dépassant 0,1 ppm en moles, et présentant une teneur en $H_2O$ de 5,0 % en moles ou moins, avec un matériau d'élimination d'ammoniac comprenant une zéolite présentant une taille de pore, mesurée tel que décrit dans « <Taille de pore de zéolite> » dans la description, de 0,5 nm ou plus et 2,0 nm ou moins, dans lequel la teneur de la zéolite présentant une taille de pore de 0,5 nm ou plus et de 2,0 nm ou moins dans le matériau d'élimination d'ammoniac est de 50 % en masse ou plus.

**2.** Procédé d'élimination d'ammoniac selon la revendication 1, dans lequel la température dans l'étape (1) est de 30 °C ou inférieure.

**3.** Procédé d'élimination d'ammoniac selon la revendication 1 ou 2, comprenant une étape d'obtention du gaz mixte (A) par décomposition d'ammoniac à une température de décomposition de 450 °C ou supérieure et de 600 °C ou inférieure, avant l'étape (1).

**4.** Procédé d'élimination d'ammoniac selon la revendication 3, dans lequel le gaz mixte (A) est obtenu par décomposition d'ammoniac par un procédé de décomposition d'ammoniac autre qu'un système autothermique.

**5.** Procédé d'élimination d'ammoniac selon l'une quelconque des revendications 1 à 4, dans lequel une structure cristalline de la zéolite est au moins une choisie dans le groupe constitué d'un type LTA, d'un type FAU, d'un type BEA, d'un type LTL, d'un type MFI, d'un type MWW, d'un type FER et d'un type MOR en tant que code structural.

**6.** Procédé d'élimination d'ammoniac selon l'une quelconque des revendications 1 à 5, dans lequel une structure cristalline de la zéolite est au moins une choisie dans le groupe constitué d'un type A, d'un type X, d'un type β, d'un type Y, d'un type L, d'un type ZSM-5, d'un type MCM-22, d'un type ferriérite et d'un type mordénite.

**7.** Procédé d'élimination d'ammoniac selon l'une quelconque des revendications 1 à 6, dans lequel une structure cristalline de la zéolite est un type X.

**8.** Procédé d'élimination d'ammoniac selon l'une quelconque des revendications 1 à 7, dans lequel la zéolite comprend en tant que cation au moins un choisi parmi un ion hydrogène, un ion lithium, un ion calcium, un ion sodium, un ion potassium, un ion magnésium et un ion baryum.

**9.** Procédé d'élimination d'ammoniac selon l'une quelconque des revendications 1 à 8, dans lequel une teneur en ammoniac du gaz mixte (A) dans l'étape (1) est de 2 000 ppm en moles ou moins.

**10.** Procédé de production d'un hydrogène gazeux pour une automobile à pile à combustible, le procédé comprenant le procédé d'élimination d'ammoniac selon l'une quelconque des revendications 1 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6141841 B

- JP 2015059075 A